(19) **Europäisches Patentamt / European Patent Office / Office européen des brevets**

(11) **EP 2 541 359 B1**

(12) **FASCICULE DE BREVET EUROPEEN**

(45) Date de publication et mention
de la délivrance du brevet:
**30.08.2017 Bulletin 2017/35**

(51) Int Cl.:
**G05D 1/08** *(2006.01)* **A63H 27/00** *(2006.01)*

(21) Numéro de dépôt: **12173525.2**

(22) Date de dépôt: **26.06.2012**

(54) **Procédé de contrôle dynamique d'attitude d'un drone, pour l'exécution automatique d'une figure de type salto**

Dynamisches Kontrollverfahren der Fluglage einer Drone zur automatischen Ausführung einer Figur vom Typ Flip

A method of dynamically controlling the attitude of a drone in order to execute a flip type maneuver automatically

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2011 FR 1155779**

(43) Date de publication de la demande:
**02.01.2013 Bulletin 2013/01**

(73) Titulaire: **Parrot Drones**
**75010 Paris (FR)**

(72) Inventeurs:
• **Callou, François**
**75009 Paris (FR)**
• **Rischmuller, Michael**
**13090 Aix-en-Provence (FR)**

(74) Mandataire: **Dupuis-Latour, Dominique**
**Bardehle Pagenberg**
**10, boulevard Haussmann**
**75009 Paris (FR)**

(56) Documents cités:
• **SERGEI LUPASHIN ET AL: "A simple learning strategy for high-speed quadrocopter multi-flips", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 mai 2010 (2010-05-03), pages 1642-1648, XP031708559, ISBN: 978-1-4244-5038-1**
• **JEREMY H GILLULA ET AL: "Design of guaranteed safe maneuvers using reachable sets: Autonomous quadrotor aerobatics in theory and practice", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 mai 2010 (2010-05-03), pages 1649-1654, XP031708734, ISBN: 978-1-4244-5038-1**

**EP 2 541 359 B1**

**Description**

L'invention concerne le pilotage des drones à voilure tournante tels que les quadricoptères et analogues.

Ces drones sont pourvus de rotors multiples entraînés par des moteurs respectifs commandables de manière différenciée afin de piloter le drone en attitude et en vitesse.

Un exemple typique d'un tel drone est le *AR.Drone* de Parrot SA, Paris, France, qui est un quadricoptère équipé d'une série de capteurs (accéléromètres, gyromètres trois axes, altimètre). Le drone est également pourvu d'une caméra frontale captant une image de la scène vers laquelle est dirigé le drone, ainsi que d'une caméra de visée verticale captant une image du terrain survolé.

Ce drone est piloté par l'utilisateur au moyen d'un dispositif de télécommande déportée - ci-après désigné "appareil" - relié au drone par une liaison radio.

Le WO 2010/061099 A2 (Parrot SA) décrit en particulier un tel drone et son principe de pilotage par l'intermédiaire d'un téléphone ou baladeur multimédia à écran tactile et accéléromètre intégré, par exemple un téléphone cellulaire de type *iPhone* ou un baladeur ou une tablette multimédia de type *iPod Touch* ou *iPad* (marques déposées de Apple Inc., USA). Ces appareils incorporent les divers organes de contrôle nécessaires à la détection des commandes de pilotage et à l'échange bidirectionnel de données avec le drone via une liaison sans fil de type réseau local *Wi-Fi* (IEEE 802.11) ou *Bluetooth* (marques déposées). En particulier, l'appareil est pourvu d'un écran tactile affichant l'image captée par la caméra frontale, avec en superposition un certain nombre de symboles permettant l'activation de commandes par simple contact du doigt de l'utilisateur sur l'écran tactile. Cet affichage permet en outre un "pilotage immersif" où l'utilisateur, au lieu de piloter le drone en regardant celui-ci, utilise l'image de la caméra de la même façon que s'il se trouvait à bord du drone.

L'invention concerne plus précisément l'exécution automatique de figures de voltige du type "vrille" ou "tonneau" (rotation du drone d'un tour complet autour de son axe de roulis) ou bien "salto" ou "saut périlleux" (rotation du drone d'un tour complet autour de son axe de tangage).

La vrille peut être à droite ou à gauche, selon le sens de rotation. Elle peut être également constituée de plusieurs tours complets enchaînés ; dans la suite on décrira une figure constituée d'un tour unique, mais cette description ne présente pas de caractère limitatif. On décrira également une figure réalisée à partir d'une configuration où le drone est initialement immobile, en sustentation, mais cette configuration n'est pas limitative non plus : la vrille peut être effectuée par exemple avec une composante de vitesse horizontale, un point du drone décrivant alors dans un repère absolu une trajectoire hélicoïdale et non plus circulaire.

Le salto peut être vers l'avant ou vers l'arrière, selon que la rotation est initiée avec un cabrage ou un piqué du drone, respectivement. On notera que le salto ne diffère de la vrille que par l'axe de rotation (roulis au lieu de tangage). De ce fait, on ne décrira dans la suite que l'exécution d'une vrille, mais tout ce qui sera dit pour une vrille pourra être transposé à l'exécution d'un salto, *mutatis mutandis* avec un choix différent d'axe de rotation.

L'article de Lupashin S et al. "A Simple Learning Strategy for High-Speed Quadrocopter Multi-Flips", Proceedings of the 2010 IEEE International Conference on Robotics and Automation, May 2010, pp. 1642-1648 décrit la manière de commander un drone de type quadricoptère pour réaliser une telle figure.

La technique décrite par ce document consiste à imprimer au drone une impulsion initiale de rotation, impulsion dont le niveau est calculé pour que le drone atteigne une attitude finale aussi proche que possible de l'horizontale à la fin de la figure.

Toutefois, comme la vrille est exécutée par le drone en boucle ouverte (sans asservissement), il n'est nullement assuré qu'à la fin de la figure le drone se retrouve à l'horizontale ou, en d'autres termes, que sa vitesse angulaire soit nulle après avoir pivoté de 360°.

Pour pallier le risque de dépassement (plus d'un tout complet) ou de sous-rotation (moins d'un tour complet), les auteurs proposent, par itérations successives, d'ajuster les durées des différentes séquences de contrôle de la vrille de manière à se rapprocher le plus possible de la figure idéale : un tour complet, ni plus ni moins, avec une vitesse angulaire finale nulle après rotation de 360°.

De ce fait, il n'est pas possible d'atteindre le résultat recherché à la première tentative. Bien au contraire, cela nécessite un grand nombre d'approximations successives, selon cet article environ 40 à 50 itérations de l'algorithme d'ajustement.

Au surplus, même après ajustement des divers paramètres, la bonne exécution de la figure peut être perturbée par divers facteurs extérieurs tels que coups de vent, turbulences à proximité d'un mur, etc.

L'article de Gillula JH et al. "Design of Guaranteed Safe Maneuvers Using Reachable Sets: Autonomous Quadrotor Aerobatics in Theory and Practice," Proceedings of the 2010 IEEE International Conference on Robotics and Automation, May 2010, pp. 1649-1654, quant à lui, décrit une technique comparable destinée à faire exécuter à un quadricoptère des *back-flips* lors d'un vol horizontal, mais cette technique présente les mêmes inconvénients et limitations que ceux exposés ci-dessus.

En pratique, la bonne exécution d'une vrille ou d'un salto se heurte à plusieurs difficultés.

L'une d'entre elles tient au fait que lorsque les moteurs sont commandés de manière à provoquer la rotation recherchée du drone, du fait de l'inversion de poussée droite/gauche ou avant/arrière qui permet de déclencher cette rotation autour de l'axe de roulis ou de tangage, le drone n'est plus sustenté et va de ce fait perdre de l'altitude entre le début et la fin de la figure (à la différence d'une rotation autour d'un axe de lacet, où le drone reste sensiblement à plat pendant la rotation).

Cette difficulté peut être résolue, comme décrit dans l'article précité de Lupashin, en commandant simultanément les moteurs du drone de manière à imprimer à celui-ci une impulsion préalable de poussée verticale vers le haut avant de commencer la rotation. Ceci donne un élan vertical suffisant au drone pour faire en sorte que, lorsqu'il aura achevé la figure, il se retrouve sensiblement à la même altitude qu'initialement.

Mais cette poussée verticale préalable, appliquée en boucle ouverte aux quatre moteurs, n'évite pas un risque de déport latéral au cas où l'attitude du drone n'est pas strictement à l'horizontale au moment de l'application de l'impulsion.

Une autre difficulté réside, comme expliqué plus haut, dans le bouclage précis d'une rotation d'un tour complet, c'est-à-dire une rotation de 360° sans dépassement angulaire qui se traduirait par une oscillation du drone autour de sa position horizontale finale. Cet inconvénient est d'autant plus marqué que la figure est exécutée rapidement - or, cette rapidité est indispensable, non seulement pour accentuer le côté spectaculaire de la figure, mais aussi et surtout pour limiter les effets, évoqués plus haut, de la perte de sustentation pendant l'exécution de la figure.

Ainsi, le problème de l'invention est de pouvoir réaliser une figure de type vrille ou salto sur un tour complet, sans perte d'altitude du drone entre l'instant de début et l'instant de fin de la figure, et en achevant la figure de façon nette et précise, sans oscillation autour de la position horizontale finale.

L'invention vise pour cela un procédé de contrôle dynamique d'attitude d'un drone à voilure tournante à rotors multiples entraînés par des moteurs respectifs commandés de manière différenciée pour l'exécution automatique d'une figure préprogrammée de type vrille, respectivement de type salto, par rotation du drone sur un tour complet autour d'un axe de rotation constitué par l'axe de roulis, respectivement par l'axe de tangage, du drone.

Le procédé de l'invention comprend, comme divulgué par l'article précité de Lupashin et al., l'exécution, à réception d'une instruction de déclenchement de la figure préprogrammée, d'un séquence d'étapes telles que celles énoncées au préambule de la revendication 1.

De façon caractéristique de l'invention, il est prévu une sous-étape de contrôle asservi telle que celle énoncée à la partie caractérisante de la revendication 1, permettant de résoudre le problème exposé ci-dessus d'achèvement de la figure sans suroscillation ni perturbation par des phénomènes extérieurs.

Les sous-revendications visent des mises en oeuvre particulières, avantageuses, du procédé de l'invention.

On va maintenant décrire un exemple de mise en oeuvre du procédé de l'invention, en référence aux dessins annexés où les mêmes références numériques désignent d'une figure à l'autre des éléments identiques ou fonctionnellement semblables.

La Figure 1 est une vue d'ensemble montrant le drone et la télécommande associée permettant son pilotage à distance.

La Figure 2 est une vue perspective du drone, montrant notamment les principaux axes de rotation impliqués dans le contrôle d'attitude.

La Figure 3 est une vue de face du drone, montrant les différentes phases de la rotation autour de l'axe de roulis lors de l'exécution d'une figure de type vrille.

La Figure 4 représente sous forme d'un diagramme d'états les différentes configurations fonctionnelles dans lesquelles peut se trouver le drone.

La Figure 5 est un schéma par blocs des différents organes de contrôle et d'asservissement ainsi que de pilotage automatique du drone.

Les Figures 6a et 6b sont des caractéristiques décrivant en fonction du temps, respectivement en termes d'angle et de vitesse angulaire, la trajectoire de référence idéale dans la phase finale de rotation planifiée.

Les Figures 7a et 7b sont des caractéristiques décrivant en fonction du temps les variations mesurées des valeurs, respectivement d'angle et de vitesse angulaire, par rapport à la trajectoire de référence idéale et par rapport aux consignes appliquées dans la phase finale de rotation planifiée.

On va maintenant décrire un exemple de mise en oeuvre de l'invention.

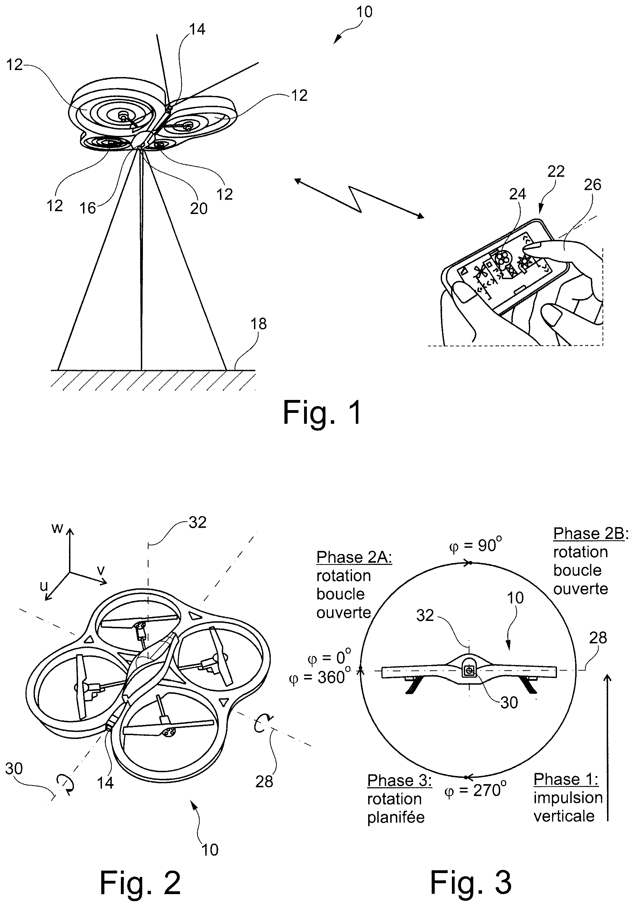

Sur la Figure 1, la référence 10 désigne de façon générale un drone de type quadricoptère, tel que par exemple le *AR.Drone* de Parrot SA, Paris, France, décrit notamment dans le WO 2010/061099 A2 précité, ainsi que dans les WO 2009/109711 A2 (système de stabilisation automatique) et FR 2 915 569 A1 (système de contrôle du drone par gyromètres et accéléromètres).

Ce drone comporte quatre rotors coplanaires 12 dont les moteurs sont pilotés indépendamment par un système intégré de navigation et de contrôle d'attitude. Le drone comporte également une caméra frontale 14 donnant une image de la scène vers laquelle se dirige le drone, ainsi qu'une caméra à visée verticale 16 donnant une image du sol 18 et servant également au calcul de la vitesse de translation horizontale. Des capteurs inertiels (accéléromètres et gyromètres) permettent de mesurer avec une certaine précision les vitesses angulaires et les angles d'attitude du drone, c'est-à-dire les angles d'Euler décrivant l'inclinaison du drone par rapport à un repère terrestre absolu. Un télémètre à ultrasons 20 disposé sous le drone fournit par ailleurs une mesure de l'altitude par rapport au sol 18.

Le drone 10 est piloté par un appareil de télécommande distant 22 pourvu d'un écran tactile 24 affichant l'image embarquée par la caméra frontale 14, avec en superposition un certain nombre de symboles permettant l'activation de commandes de pilotage par simple contact du doigt 26 de l'utilisateur sur l'écran tactile 24. Comme indiqué en introduction, l'appareil 22 est avantageusement constitué par un téléphone ou baladeur multimedia à écran tactile et accéléromètre intégré, par exemple un téléphone cellulaire de type *iPhone*, un baladeur de type *iPod Touch* ou une tablette multimédia de type *iPad*, qui sont des appareils incorporant les divers organes de contrôle nécessaires à l'affichage et à la détection des commandes de pilotage, à la visualisation de l'image captée par la caméra frontale, et à l'échange de données avec le drone par une liaison radio bidirectionnelle permettant l'envoi de commandes de pilotage vers le drone, et en sens inverse la transmission de l'image captée par la caméra 14 ainsi que de données d'état du drone. Cette liaison radio peut être notamment de type réseau local *Wi-Fi* (IEEE 802.11) ou *Bluetooth* (marques déposées). L'appareil de télécommande 22 est également pourvu de capteurs d'inclinaison permettant de contrôler l'attitude du drone en imprimant à l'appareil des inclinaisons correspondantes selon des axes de roulis et de tangage (on pourra se référer au WO 2010/061099 A2 précité pour plus de détails sur ces aspects du système).

L'utilisateur pilote directement le drone par une combinaison :

- de commandes disponibles sur l'écran tactile, notamment "montée/descente" (correspondant à une commande des gaz) et "rotation à droite/rotation à gauche" (pivotement du drone autour d'un axe de lacet) ; et
- de signaux émis par le détecteur d'inclinaison de l'appareil : par exemple, pour faire avancer le drone l'utilisateur incline son appareil selon l'axe de tangage correspondant, et pour déporter le drone à droite ou à gauche il incline ce même appareil par rapport à l'axe de roulis : ainsi, si les moteurs sont commandés de manière que le drone s'incline ou "plonge" vers le bas (inclinaison suivant un angle de tangage), alors il va progresser vers l'avant avec une vitesse d'autant plus élevée que l'inclinaison sera importante ; inversement s'il se "cabre" dans le sens opposé, sa vitesse va progressivement ralentir puis s'inverser en repartant vers l'arrière. De la même façon, une inclinaison suivant un axe de roulis (le drone penche à droite ou à gauche) va provoquer un déplacement linéaire du drone en translation horizontale vers la droite ou vers la gauche.

Le drone possède également un système automatique et autonome de stabilisation en vol stationnaire, activé notamment dès que l'utilisateur retire son doigt de l'écran tactile de l'appareil, ou automatiquement à la fin de la phase de décollage, ou encore en cas d'interruption de la liaison radio entre l'appareil et le drone. Le drone passe alors à un état de sustentation où il sera immobilisé et maintenu dans cette position fixe par le système de pilotage automatique et de stabilisation, sans aucune intervention de l'utilisateur.

La Figure 2 illustre le drone 10 avec ses axes de rotation, respectivement axes de tangage 28, de roulis 30 et de lacet 32, ainsi que le repère $(u,v,w)$ lié au corps du drone dans lequel seront exprimées plus loin les différentes équations modélisant le comportement dynamique du drone.

L'invention concerne plus précisément l'exécution d'une figure de type vrille, correspondant à une rotation d'un tour complet autour de l'axe de roulis 30, ou de type salto, correspondant à une rotation d'un tour complet autour de l'axe de tangage 28.

On décrira ci-dessous l'exécution d'une vrille, l'exécution d'un salto étant identique, après permutation des axes de roulis 30 et de tangage 28.

Sur la Figure 3, on a schématisé les différentes phases d'une vrille, exécutée par définition avec un angle de tangage constant, sensiblement nul, et un angle de roulis variant de $\varphi = 0°$ à $\varphi = 360°$.

De façon caractéristique de l'invention, l'exécution de la vrille comprendra trois phases successives avec :

- Phase 1 : impulsion préalable de poussée verticale imprimée au drone de manière à compenser la perte de sustentation et l'inversion de poussée pendant le retournement, afin que l'altitude en fin de vrille ($\varphi = 360°$) soit sensiblement la même que l'altitude initiale ($\varphi = 0°$) ;
- Phase 2 : rotation imprimée par l'envoi direct aux moteurs de commandes en boucle ouverte ;
- Phase 3 : achèvement du tour par commande planifiée, asservie, des moteurs de manière à terminer la figure avec le même angle de roulis final ($\varphi = 360°$) que l'angle de roulis initial, nul ($\varphi = 0°$).

Ces différentes phases seront décrites plus en détail par la suite, après que l'on ait décrit l'architecture générale des commandes du drone et des organes de contrôle et d'asservissement de celui-ci.

*Intégration de la fonction vrille/salto*

*dans le diagramme de séquencement du drone*

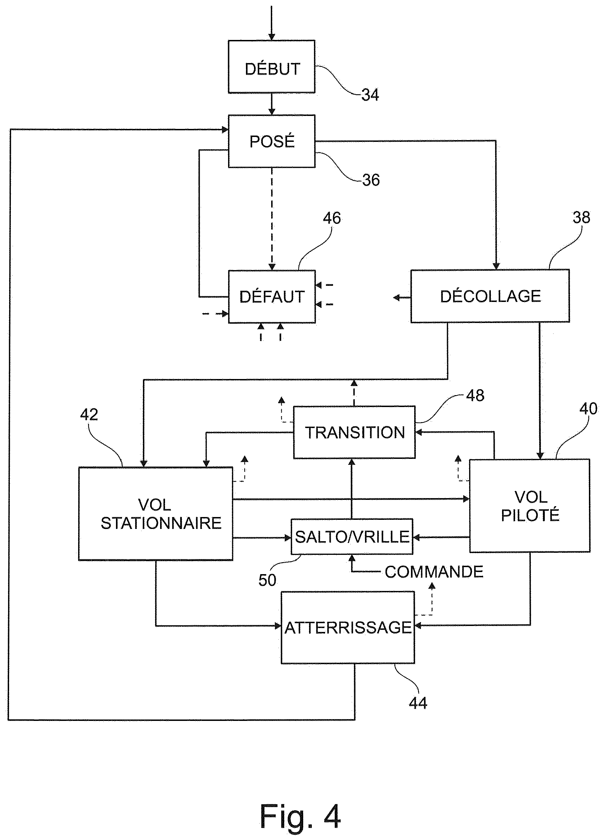

Sur la Figure 4, on a représenté sous forme d'un diagramme d'états les différentes configurations fonctionnelles dans lesquelles peut se trouver le drone.

Juste après l'allumage et un certain nombre d'étapes d'initialisation (bloc 34), le drone se trouve à l'état "posé" (bloc 36), avec les moteurs prêts à démarrer. L'envoi d'une commande par l'utilisateur provoque le lancement des moteurs et le décollage du drone (bloc 38). Ensuite, deux modes principaux de fonctionnement sont possibles :

- dans un premier mode de pilotage ou "vol piloté" (bloc 40), le pilotage du drone est opéré de façon directe par l'utilisateur, au moyen, comme expliqué plus haut, d'une combinaison de signaux émis par le détecteur d'inclinaison de l'appareil et de commandes disponibles sur l'écran tactile ;
- l'autre mode de pilotage (bloc 42) est un mode automatique mettant en oeuvre le système autonome de stabilisation en vol stationnaire. Ce mode autopiloté est notamment activé à la fin de la phase de décollage, dès que l'utilisateur retire son doigt de l'écran tactile de l'appareil, ou en cas d'interruption de la liaison radio entre l'appareil et le drone.

Le vol, piloté ou stationnaire, prend fin par passage à un état d'atterrissage (bloc 44), suite à l'appui sur une commande spécifique de l'appareil ou en cas de batterie faible. Le passage à cet état produit une réduction du régime des rotations des moteurs et une diminution corrélative de l'altitude. Lorsque le contact avec le sol a été détecté, l'état est à nouveau l'état "posé" du bloc 36.

Il est également prévu un état de défaut (bloc 46) qui correspond à un état d'urgence en cas d'anomalie détectée, provoquant un arrêt immédiat des moteurs. Cet état de défaut peut être atteint à partir de n'importe lequel des états précédemment décrits, notamment en cas de défaut moteur (blocage d'un rotor), d'anomalie logicielle ou à la suite d'un choc détecté par l'accéléromètre.

Le drone comporte également des moyens de transition progressive (bloc 48) du vol piloté (état de mouvement, bloc 40) au vol stationnaire (état de sustentation, bloc 42), pour permettre au drone de passer de l'état de mouvement, où il se déplace avec une inclinaison non nulle et donc une vitesse horizontale qui peut être relativement élevée, jusqu'à l'état de sustentation où il sera immobile et maintenu dans cette position fixe par le système de pilotage automatique et de stabilisation. Cette procédure d'arrêt sera opérée en un temps minimal et sans inversion de vitesse horizontale.

Le bloc 50 d'activation d'une figure de type salto ou vrille selon l'invention est activé sur réception d'une commande correspondante, générée manuellement par une action de l'utilisateur (appui sur un bouton affiché sur l'écran tactile de l'appareil de télécommande, secousses imprimées à cet appareil, etc.) ou de façon automatique par exemple par la réunion d'un certain nombre de conditions prévues dans le scénario d'un jeu vidéo exécuté par le dispositif de télécommande.

Cette commande comprend l'indication du type de figure (salto ou vrille, qui déterminera l'axe de rotation suivant lequel sera effectué le pivotement du drone), ainsi que le sens d'exécution (à droite/à gauche pour une vrille, vers l'avant/vers l'arrière pour un salto).

La figure peut être exécutée aussi bien depuis une situation de vol piloté par l'utilisateur (bloc 40) qu'à partir d'un mode autopiloté, en vol stationnaire (bloc 42). Une fois la figure exécutée, l'état suivant sera une transition (bloc 48) vers le vol stationnaire (bloc 42) pour stabiliser le drone dans une position d'immobilité.

*Architecture générale des organes de contrôle et d'asservissement du drone*

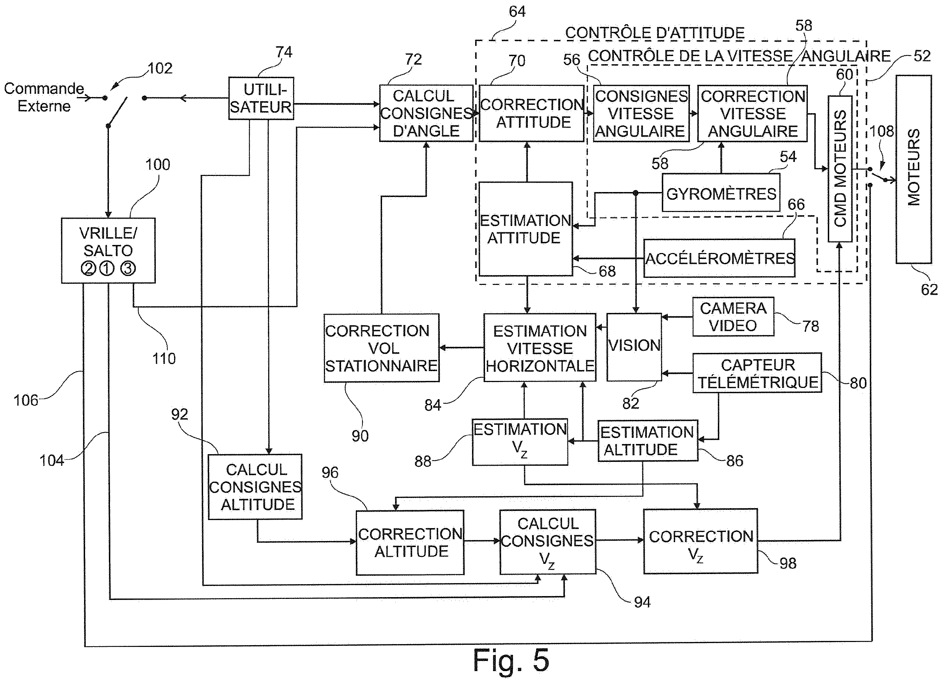

La Figure 5 est un schéma par blocs fonctionnels des différents organes de contrôle et d'asservissement ainsi que de pilotage automatique du drone. On notera toutefois que, bien que ce schéma soit présenté sous forme de circuits interconnectés, la mise en oeuvre des différentes fonctions est essentiellement logicielle, et cette représentation n'a qu'un caractère illustratif.

Le système de pilotage met en jeu plusieurs boucles imbriquées pour le contrôle de la vitesse angulaire, de l'attitude du drone et pour la stabilisation du vol stationnaire, en plus du contrôle des variations d'altitude automatiquement ou sous l'effet d'une commande de l'utilisateur.

La boucle la plus centrale, qui est la boucle 52 de contrôle de la vitesse angulaire, utilise d'une part les signaux fournis par des gyromètres 54, et d'autre part une référence constituée par des consignes de vitesse angulaire 56, ces différentes informations étant appliquées en entrée d'un étage 58 de correction de la vitesse angulaire. Cet étage 58 pilote un étage 60 de contrôle des moteurs 62 afin de commander séparément le régime des différents moteurs pour corriger la vitesse angulaire du drone par l'action combinée des rotors entraînés par ces moteurs.

La boucle 52 de contrôle de la vitesse angulaire est imbriquée dans une boucle 64 de contrôle d'attitude, qui opère à partir des indications fournies par les gyromètres 54 et des accéléromètres 66, ces données étant appliquées en entrée d'un étage d'estimation d'attitude 68 dont la sortie est appliquée à un étage 70 de correction d'attitude de type PI (Proportionnel-Intégrateur). L'étage 70 délivre à l'étage 56 des consignes de vitesse angulaire, qui sont également fonction de consignes d'angle générées par un circuit 72 à partir de données générées en interne par le pilote automatique du drone, ou bien à partir de commandes directement appliquées par l'utilisateur 74.

À partir de l'erreur entre la consigne (appliquée par l'utilisateur ou générée en interne dans le cas d'un pilotage automatique) et la mesure de l'angle donnée par le circuit d'estimation d'attitude 68, la boucle 64 de contrôle d'attitude (circuits 54 à 70) calcule une consigne en vitesse angulaire à l'aide du correcteur PI du circuit 70. La boucle 52 de contrôle de la vitesse angulaire (circuits 54 à 60) calcule ensuite la différence entre la consigne de vitesse angulaire précédente et la vitesse angulaire effectivement mesurée par les gyromètres 54. La boucle calcule à partir de ces informations les différentes consignes de vitesse de rotation (et donc de force ascensionnelle) à envoyer aux moteurs 62 du drone pour réaliser la manoeuvre planifiée par le pilote automatique ou demandée par l'utilisateur.

Pour le fonctionnement autopiloté, les consignes sont générées en interne. La caméra vidéo verticale 78 et le capteur télémétrique 80 faisant fonction d'altimètre produisent des informations appliquées à un circuit de traitement 82 recevant également les données issues des gyromètres 54 pour appliquer les corrections nécessaires à l'estimation de la vitesse horizontale par le circuit 84. Cette estimation de la vitesse horizontale peut être corrigée par une estimation de la vitesse verticale, donnée par le circuit 88 à partir d'une estimation d'altitude fournie par le circuit 86 recevant l'information du capteur télémétrique 80.

En vol stationnaire, la vitesse horizontale estimée par le circuit 84 permet le calcul par le circuit 90 de consignes de vitesse qui seront ensuite appliquées en entrée de la boucle de contrôle d'attitude après transformation en consignes d'angle par le circuit 72, pour amener le drone à une vitesse nulle ou maintenir celui-ci à une configuration avec vitesse et inclinaison nulles.

En ce qui concerne les déplacements verticaux du drone, l'utilisateur 74 applique directement une consigne de vitesse ascensionnelle $V_z$ à un circuit 94 , ou une consigne d'altitude à un circuit 92 qui calcule par le circuit 96 une consigne de vitesse ascensionnelle à partir de l'estimation d'altitude donnée par le circuit 86.

Dans l'un ou l'autre cas, la vitesse ascensionnelle (prescrite ou calculée) est appliquée à un circuit 98 qui compare la consigne à la vitesse ascensionnelle estimée $V_z$ donnée par le circuit 88, et modifie en conséquence les données de commande des moteurs (circuit 60) de manière à augmenter ou réduire la vitesse de rotation simultanément sur tous les moteurs de façon à minimiser l'écart entre vitesse ascensionnelle de consigne et vitesse ascensionnelle mesurée.

Pour l'exécution des figures de type vrille ou salto, il est prévu des commandes spécifiques, symbolisées par le bloc 100 opérant soit sur commande de l'utilisateur 74, soit à partir de commandes externes (commutateur 102), par exemple des commandes générées par le scénario d'un jeu vidéo exécuté par l'appareil de télécommande de l'utilisateur. Dans ce dernier cas, la commande générée automatiquement est transmise au drone en même temps que les signaux de pilotage.

Le bloc 100 permet de contrôler les trois phases précitées décrivant l'exécution de la figure :

- Phase 1 (impulsion verticale) : par une liaison 104 au bloc 94 de calcul des consignes de vitesse ascensionnelle ;
- Phase 2 (rotation avec commande en boucle ouverte) : par une liaison directe 106 aux moteurs 62, ceux-ci étant découplés des diverses boucles d'asservissement par l'interrupteur schématisé en 108 ;
- Phase 3 (rotation planifiée, asservie) : par une liaison 110 au le bloc 72 de calcul des consignes d'angle, ces dernières étant calculées de la manière que l'on exposera plus bas en fonction d'un modèle prédéterminé décrivant le comportement du drone pendant la phase de rotation planifiée.

*Modélisation du comportement du drone*

Les données de vitesse du drone sont données dans le repère ($u,v,w$) illustré Figure 2, c'est-à-dire dans un repère lié au corps du drone.

On désignera par :

- $u$ et $v$ les composantes de la vitesse de translation horizontale ($u$ dans le sens principal $\Delta$ de progression du drone et $v$ dans la direction transversale), et $w$ la vitesse de translation verticale, le tout dans un repère lié au drone (donc indépendant de l'inclinaison de celui-ci par rapport au repère terrestre de référence),
- $p$, $q$ et $r$ les vitesses angulaires suivant les trois axes respectifs de tangage 28, de roulis 30 et de lacet 32 (Figure 2), et
- $\varphi$, $\theta$ et $\psi$ les angles d'Euler du drone définissant son orientation par rapport à un repère terrestre de référence (galiléen), $\varphi$ et $\theta$ étant les deux angles définissant l'inclinaison par rapport à l'horizontale.

Chacune des quatre hélices $i$ du drone ($i$ = 1 ... 4) exerce un couple $\Gamma i$ et une force de poussée ascensionnelle $F_i$ proportionnelle au carré de la vitesse de rotation $\omega_i$ du moteur :

$$\begin{cases} F_i = a\omega_i^2 \\ \Gamma_i = b\omega_i^2 \end{cases}$$

On applique la relation fondamentale de la dynamique, en projection dans le référentiel mobile du drone, ce qui donne les trois équations suivantes :

$$\dot{u} = (rv - qw) - g\sin\theta - Cxu$$
$$\dot{v} = (pw - ru) + g\sin\varphi\cos\theta + Cyv$$
$$\dot{w} = (qu - pv) + g\cos\varphi\cos\theta - \frac{1}{m}\sum_{i=1}^{4} a\,\omega_i^2$$

(Équations 1-3)

g étant l'accélération de la pesanteur,
*Cx* et *Cy* étant les coefficients de résistance à l'avancement (reflétant les forces de frottement subies par le drone) dans les deux axes horizontaux, *a* étant un coefficient liant la poussée et la vitesse ascensionnelle à la vitesse de rotation ω, et
*m* étant la masse du drone.

On applique de la même façon le théorème du moment dynamique au système, toujours en projection dans le référentiel mobile, ce qui conduit aux trois équations suivantes :

$$I_x\dot{p} + qr(I_z - I_y) = la(\omega_2^2 - \omega_4^2)$$
$$I_y\dot{q} + pr(I_x - I_z) = la(\omega_1^2 - \omega_3^2)$$
$$I_z\dot{r} + pq(I_y - I_x) = b(\omega_1^2 - \omega_2^2 + \omega_3^2 - \omega_4^2)$$

(Équations 4-6)

$I_x$, $I_y$ et $I_z$ étant des paramètres représentatifs du coefficient d'inertie du drone dans les trois axes, et *l* étant la distance séparant le moteur du centre de gravité du drone.

Dans ces équations, le premier terme du membre de gauche correspond au moment dynamique du système, le second terme représente la contribution au moment dynamique des forces de Coriolis, et le membre de droite correspond aux moments exercés par les forces ascensionnelles $F_i$ et les couples $\Gamma_i$ créés par les hélices de chacun des rotors.

Enfin, on démontre la relation suivante faisant intervenir les trois angles d'Euler $\varphi$, $\theta$ et $\psi$ :

$$\dot{\varphi} = p + (q\sin\varphi + r\cos\varphi)\tan\theta$$
$$\dot{\theta} = q\cos\varphi - r\sin\varphi$$
$$\dot{\psi} = \frac{q\sin\varphi + r\cos\varphi}{\cos\theta}$$

(Équations 7-9)

Le comportement du système est donc décrit au total par neuf équations à neuf inconnues (Équations 1-9 ci-dessus).

Au voisinage du point d'équilibre, avec le drone en sustentation à l'horizontale (vitesse et inclinaison nulles), on a :

$$u = v = w = \theta = \varphi = 0$$

Les Équations 1-9 deviennent :

$$g = \frac{1}{m} \sum_{1}^{4} a\omega_i^2 \ ,$$

$p = q = r = 0$, $\omega_1 = \omega_3$, $\omega_2 = \omega_4$, $\omega_1 = \omega_2$

Et donc, au voisinage du point d'équilibre :

$$\omega_1 = \omega_2 = \omega_3 = \omega_4 = \frac{1}{2}\sqrt{\frac{mg}{a}} = \omega_0$$

Si l'on pose $w_i = \omega_i - \omega_0$, avec $i = 1... 4$, et que l'on linéarise à l'ordre 1 les équations précédentes 1 à 9 autour du point d'équilibre, on aboutit au système d'équations linéarisées suivant :

$$\begin{cases} \dot{u} = -g(\theta) - Cx * u \\ \dot{v} = g(\varphi) + Cy * v \\ \dot{w} = -\dfrac{2a\omega_0}{m}(w_1 + w_2 + w_3 + w_4) \\ \dot{p} = \dfrac{la\omega_0}{I_x}(w_2 - w_4) \\ \dot{q} = \dfrac{la\omega_0}{I_y}(w_1 - w_3) \\ \dot{r} = \dfrac{b\omega_0}{I_z}(w_1 + w_3 - w_2 - w_4) \\ \dot{\varphi} = p \\ \dot{\theta} = q \\ \dot{\psi} = r \end{cases}$$

(Équations 10-18)

On obtient ainsi une modélisation du comportement du drone, qui sera utilisée en particulier pour prédire son comportement lors de la phase de rotation planifiée (Phase n°3) et pour calculer les consignes d'angle à appliquer.

*Phase 1 (impulsion verticale)*

Le but de cette étape est de donner un élan suffisant au drone en direction verticale pour faire en sorte que, lorsqu'il aura achevé la figure, il se trouve sensiblement à la même altitude qu'auparavant. Il s'agit, en d'autres termes, de faire monter rapidement le drone afin qu'il ne subisse pas de perte d'altitude durant la figure, lorsqu'il ne bénéficiera plus de la sustentation des hélices et, dans la partie de la figure où il se trouvera en configuration retournée, subira même une poussée en sens inverse, en direction du sol.

La manoeuvre consiste donc à envoyer dans la boucle d'asservissement de vitesse verticale, tout en conservant le contrôle en attitude du drone, une référence de vitesse maximale, par exemple une consigne de vitesse verticale de 1000 mm/seconde pour une rotation d'un tour complet (ou une consigne double, de 2000 mm/seconde si l'on veut enchaîner deux tours consécutifs sans interruption).

Une fois la vitesse de consigne de 1000 mm/seconde atteinte, la phase suivante est engagée.

*Phase 2 (rotation avec commande en boucle ouverte)*

L'algorithme envoie directement aux quatre moteurs du drone, en boucle ouverte, une séquence de commandes afin de provoquer la rotation recherchée autour de l'axe de roulis $\varphi$ (ou de tangage, pour un salto). Cette phase peut se décomposer en deux sous-phases :

- pour un angle $\varphi$ compris entre 0 et 90° (Phase 2A sur la Figure 3), on envoie des commandes de vitesse de rotation maximale sur les moteurs n°1 et n°4 (les deux moteurs situés d'un même côté de l'axe de roulis) et de vitesse de rotation minimale sur les moteurs n°2 et n°3 (les deux moteurs situés de l'autre côté du même axe) ;

- pour un angle $\varphi$ compris entre 90° et 270° (Phase 2B sur la Figure 3), une consigne de vitesse de rotation minimale est envoyée aux quatre moteurs. En effet, les commandes envoyées pendant la première sous-phase ont permis de donner au drone une impulsion de rotation avec un élan suffisant pour qu'il puisse poursuivre cette rotation sur le demi-tour suivant. Comme sur ce demi-tour le drone ne sera plus sustenté et se retrouvera même dans une configuration retournée, pour minimiser les effets contraires de la poussée des hélices, il convient que celles-ci tournent à leur régime de rotation minimal.

Une fois la valeur d'angle de roulis $\varphi$ = 270° atteinte par le drone, on peut passer à la troisième phase.

*Phase 3 (rotation planifiée, asservie)*

On souhaite que la vrille soit rattrapée automatiquement, sans intervention de l'utilisateur, par application de consignes permettant une transition progressive, en un temps minimal et sans dépassement de la position angulaire $\varphi$ = 0, c'est-à-dire sans oscillation autour de la position finale. Pour cela, le comportement du drone aura été préalablement identifié par une fonction de transfert représentant la réponse angulaire réelle du drone à une consigne. Il sera ainsi possible de prédire le comportement du drone et d'appliquer la consigne angulaire optimale pour l'arrêter (i) en un temps minimum, et (ii) sans dépassement de la position angulaire cible (angle de roulis nul $\varphi$ = 0°).

Plus précisément, il convient de tenir compte de l'inertie du drone, qui se traduit en un écart entre la consigne d'angle $\varphi_{ref}$ et l'angle correspondant mesuré $\varphi_{mesure}$. Pour cela, on identifie la fonction de transfert $\varphi_{mesure}/\varphi_{ref}$ que l'on assimile à un système du second ordre. Dans le formalisme de Laplace, on aura ($p$ étant la variable de Laplace) :

$$\frac{\varphi_{mesure}(p)}{\varphi_{ref}(p)} = \frac{K}{(1 + \tau_1 * p) * (1 + \tau_2 * p)}$$

Après identification du modèle, on trouve :

$$\frac{\varphi(p)}{\varphi ref(p)} = \frac{60/90}{\frac{p^{\wedge}2}{90} + \frac{12}{90}*p+1}$$

On obtient à partir de ce modèle dans le formalisme de Laplace, une équation différentielle en fonction du temps, qui donne la valeur de la consigne à chaque instant :

$$\varphi ref(t) = \frac{1}{60} * (\ddot{\varphi}(t) + 12 * \dot{\varphi}(t) + 90 * \varphi(t))$$

À partir de cette expression, il convient de choisir la forme de la fonction $t \to \varphi(t)$ qui permet de rattraper la différence entre consigne et mesure dans la phase finale de la vrille.

On prendra ici un polynôme du troisième ordre en $t$ (le paramètre temporel) pour réaliser le mouvement souhaité.

On en déduit par dérivations temporelles successives les polynômes $t \to \dot{\varphi}(t)$ et $t \to \ddot{\varphi}(t)$ qui permettront de calculer, à partir de la relation donnée ci-dessus, une consigne tenant compte de l'inertie de la boucle d'asservissement en angle du drone.

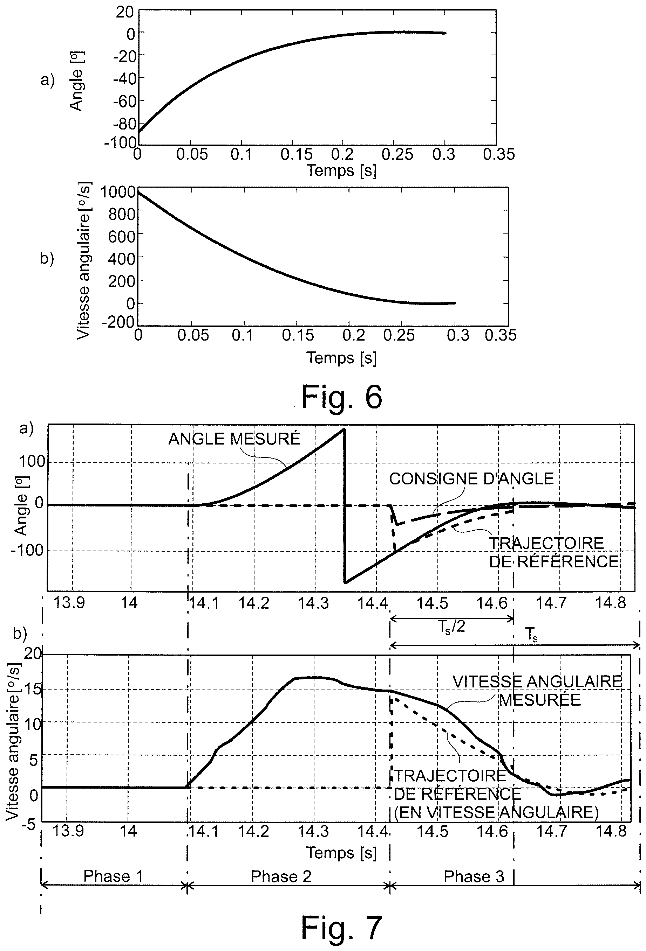

Les Figures 6a et 6b décrivent la trajectoire de référence donnée par ces polynômes, respectivement en termes d'angle et de vitesse angulaire.

L'un des paramètres du calcul est la valeur du temps d'arrêt entre la position angulaire intermédiaire $\varphi$ = 270° (*soit* $\varphi$ = -90°) et la position angulaire finale $\varphi$ = 0°. On prendra par exemple un temps d'arrêt ou "horizon temporel" $T$ de 0,3 seconde. Il convient également d'annuler la vitesse angulaire lorsque $\varphi$ = 0°.

Pour connaître le polynôme, il est nécessaire d'en déterminer les coefficients.

Ce calcul est effectué de la manière suivante.

On a vu plus haut que, pour une vrille dans le sens positif, la vitesse angulaire est donnée par :

$$\dot{\varphi} = p + (qsin\varphi + rcos\varphi)tan\theta$$

On peut faire l'approximation des petits angles pour l'angle $\theta$ (mouvement à tangage supposé nul, soit $\theta \approx 0^{c}$. Dans ce cas, la relation précédente peut être approximée par : $\dot{\varphi} \approx p$.

Si l'on désigne par *a, b, c et d* les coefficients du polynôme, on a :

$$\varphi(t) = a.t^3 + b.t^2 + c.t + d$$

À partir des conditions initiales, à *t* = 0 (instant où le drone atteint la position intermédiaire $\varphi$ = 270° entre les phases 2 et 3), on obtient :

$$\varphi(0) = d = \varphi_{initial} \text{ et } \dot{\varphi}(0) = c = p_{initial}$$

À la fin de la phase 3, à *t = T,* l'angle et la vitesse angulaire sont tous deux nuls, ce qui donne :

$$\varphi(t = Ts) = a * T^3 + b * T^2 + c * T + d = a * T^3 + b * T^2 + p_{initial} * T + \varphi_{initial} = 0$$

$$\dot{\varphi}(t = Ts) = a * T^2 + b * T + c = a * T^3 + b * T^2 + p_{initial} = 0$$

On peut déduire de ces quatre expressions les valeurs des coefficients *a, b, c* et *d* des polynômes :

$$a = \frac{1}{T^2} * (\frac{2 * \varphi_{initial}}{T} + p_{initial})$$

$$b = -\frac{1}{T} * (\frac{3 * \varphi_{initial}}{T} + 2 * p_{initial})$$

$$c = p_{initial}$$

$$d = \varphi_{initial}$$

*T*       étant la valeur du temps d'arrêt,

$\varphi_{initial}$       étant la valeur d'angle de la position angulaire intermédiaire correspondant au début de la phase de rotation planifiée, c'est-à-dire $\varphi$ = -90° (ou 270°) à *t* = 0, et

$p_{initial}$       étant la vitesse angulaire du drone mesurée pour cette même position angulaire intermédiaire.

On notera que la valeur initiale $\varphi$ = -90° (ou 270°) n'est donnée qu'à titre d'exemple, et n'est pas limitative ; la phase de rotation planifiée pourrait être engagée avant, ou après, que le drone atteigne un angle $\varphi$ = 270°.

Ces quatre coefficients *a, b, c* et *d* permettent de déterminer l'angle de roulis à donner au drone (c'est-à-dire la consigne) pour qu'il puisse s'arrêter après une vrille. Ils tiennent compte de la vitesse angulaire initiale, au début de la phase 3, de l'angle atteint à ce même moment, et du temps *T* imparti pour l'arrêt du drone.

À l'instant initial (*t* = 0 et $\varphi$ = 270°, début de la phase 3), l'angle de roulis $\varphi$ initial et la vitesse angulaire *p* initiale donnés par les capteurs du drone sont enregistrés, et l'algorithme calcule les coefficients *a, b, c* et *d* du polynôme $\varphi(t)$ = a.t³ + b.t² + c.t + d.

Ensuite, l'algorithme calcule à chaque instant (pour chaque échantillon *k* du calculateur) les valeurs suivantes :

$$\varphi(k) = a * t(k)^3 + b * t(k)^2 + c * t(k) + d$$

$$\dot{\varphi}(k) = 3 * a * t(k)^2 + 2 * b * t(k) + c$$

$$\ddot{\varphi}(k) = 6 * a * t(k) + 2 * b$$

avec $t(k) = k.T_e$, où $T_e$ est la période d'échantillonnage du calculateur.

On obtient ainsi les consignes appliquées à la boucle de contrôle d'attitude du drone. Cette commande sera considérée comme la commande optimale pour achever la figure dans le temps imparti.

Le modèle que l'on a utilisé est toutefois un modèle approximé à un second ordre, qui contient donc des erreurs d'identifications. La valeur de l'angle recherché (correspondant à la trajectoire de référence prédéfinie) s'éloigne donc petit à petit de cette dernière.

Pour compenser cet écart, on réinitialise l'algorithme, par recalcul des coefficients du polynôme, par exemple à $t = 0{,}15$ seconde, correspondant à la moitié de la période d'arrêt $T$ prédéfinie.

En d'autres termes, au milieu de la manoeuvre de la phase 3, pour éviter que la mesure de l'angle de roulis ne s'éloigne trop de la trajectoire de référence, on replanifie la manoeuvre avec un horizon temporel plus réduit (0,15 seconde au lieu de 0,3 seconde) de manière à recaler au mieux le mouvement du drone sur la trajectoire de référence (trajectoire cible).

Les Figures 7a et 7b illustrent des résultats d'essais réalisés en vol donnant en fonction du temps, respectivement les variations des valeurs d'angle $\varphi$ et de vitesse angulaire $p$ telles que mesurées, par rapport à la trajectoire de référence (exprimée en termes d'angle sur la Figure 7a et en termes de vitesse angulaire sur la Figure 7b) et par rapport aux consignes calculées, appliquées dans la phase finale de rotation planifiée.

Ces figures montrent l'écart qui augmente progressivement entre l'angle mesuré (ou la vitesse angulaire mesurée) et la trajectoire de référence prédéfinie, écart qui justifie le recalcul des coefficients du polynôme au bout d'un temps $T/2 = 0{,}15$ seconde.

**Revendications**

1. Un procédé de contrôle dynamique d'attitude d'un drone (10) à voilure tournante à rotors multiples (12) entraînés par des moteurs respectifs commandés de manière différenciée,

   pour l'exécution automatique d'une figure préprogrammée de type vrille, respectivement de type salto, par rotation du drone sur un tour complet autour d'un axe de rotation constitué par l'axe de roulis (30), respectivement par l'axe de tangage (28), du drone,

   ce procédé comprenant l'exécution, à réception d'une instruction de déclenchement de la figure préprogrammée, d'un séquence d'étapes de :

   a) commande simultanée des moteurs de manière à imprimer au drone une impulsion préalable de poussée verticale ($V_z$) vers le haut (PHASE 1) ; et
   b) commande des moteurs de manière à produire une rotation du drone autour de l'axe de rotation, depuis une position angulaire initiale jusqu'à une position angulaire finale avec une vitesse angulaire nulle, cette étape comprenant une phase de commande en boucle ouverte des moteurs, l'étape b) comprenant les sous-étapes successives de :

   b1) commande différenciée des moteurs, non asservie, de manière à produire une rotation du drone autour de l'axe de rotation depuis une position angulaire initiale jusqu'à une position angulaire intermédiaire prédéterminée (PHASE 2) ; puis
   b2) commande différenciée des moteurs, asservie à une trajectoire-cible de référence définie en termes de vitesse angulaire et/ou d'angle, de manière à achever la rotation du drone sur un tour complet autour de l'axe de rotation depuis la position angulaire intermédiaire avec une vitesse angulaire non nulle, jusqu'à une position angulaire finale avec une vitesse angulaire nulle (PHASE 3),

   ce procédé étant **caractérisé en ce que** l'étape b2) comprend les sous-étapes consistant à :

   b21) impartir une valeur de temps d'arrêt entre la position angulaire intermédiaire et la position angulaire finale ;
   b22) mesurer la vitesse angulaire du drone lorsque celui-ci atteint la position angulaire intermédiaire prédéterminée ;
   b23) à partir du temps d'arrêt imparti à l'étape b21) et de la mesure acquise à l'étape b22), paramétrer une fonction prédictive prédéterminée modélisant une variation continue optimale de la position angulaire du drone en fonction du temps, depuis la position angulaire intermédiaire jusqu'à la position angulaire finale à la fin du temps imparti ; et

b24) à partir de la fonction prédictive paramétrée à l'étape b23), générer des valeurs de consigne correspondant à une position angulaire cible précalculée à un instant donné, et appliquer ces valeurs de consigne à une boucle d'asservissement de contrôle des moteurs du drone.

**2.** Le procédé de la revendication 1, dans lequel les valeurs de consigne sont des consignes d'angle d'inclinaison ($\varphi$) du drone par rapport à son axe de roulis (30), respectivement par rapport à son axe de tangage (28).

**3.** Le procédé de la revendication 1, dans lequel la fonction prédictive prédéterminée est une fonction polynomiale, et l'étape b23) de paramétrage de cette fonction est une étape de détermination des coefficients du polynôme.

**4.** Le procédé de la revendication 3, dans lequel la fonction polynomiale est une fonction polynomiale du troisième ordre.

**5.** Le procédé de la revendication 4, dans lequel la fonction polynomiale est une fonction du type :

$$\varphi(t) = a.t^3 + b.t^2 + c.t + d$$

$\varphi(t)$ étant la position angulaire correspondant à la valeur de consigne générée à l'étape b24), et
$a, b, c$ et $d$ étant les coefficients du polynôme paramétré à l'étape b23), tels que :

$$a = \frac{1}{T^2} * \left(\frac{2 * \varphi_{initial}}{T} + p_{initial}\right)$$

$$b = -\frac{1}{T} * \left(\frac{3 * \varphi_{initial}}{T} + 2 * p_{initial}\right)$$

$$c = p_{initial}$$

$$d = \varphi_{initial}$$

$T$ étant la valeur du temps d'arrêt imparti à l'étape b21),
$\varphi_{initial}$ étant la valeur d'angle de la position angulaire intermédiaire, et
$p_{initial}$ étant la vitesse angulaire du drone mesurée à l'étape b22), pour la position angulaire intermédiaire.

**6.** Le procédé de la revendication 1, comprenant au moins une réitération des étapes b22) et b23) lorsque le drone atteint une position angulaire prédéterminée de redéfinition des consignes, cette position angulaire de redéfinition des consignes étant comprise entre la position angulaire intermédiaire de l'étape b2) et la position angulaire finale, et la position angulaire de redéfinition étant prise comme nouvelle position angulaire intermédiaire pour le paramétrage de l'étape b23).

**7.** Le procédé de la revendication 1, dans lequel l'étape a) de commande simultanée des moteurs de manière à imprimer au drone une impulsion préalable de poussée verticale vers le haut est une étape exécutée en conservant un contrôle d'attitude du drone.

**8.** Le procédé de la revendication 1, comprenant en outre, une fois la position angulaire finale atteinte, une étape finale de :

c) transition (48) jusqu'à un état de sustentation (42) du drone avec activation d'une boucle de commande de vol stationnaire apte à stabiliser le drone avec une vitesse linéaire horizontale nulle et une inclinaison nulle par rapport au sol.

**EP 2 541 359 B1**

9. Un logiciel, téléchargeable dans une mémoire numérique d'un drone à voilure tournante, ce logiciel comprenant des instructions qui, lorsqu'elles sont exécutées à réception d'une instruction de déclenchement d'une figure préprogrammée de type vrille ou de type salto en provenance d'un appareil de télécommande, mettent en oeuvre un procédé de contrôle dynamique d'attitude du drone selon l'une des revendications 1 à 8.

**Patentansprüche**

1. Verfahren zur dynamischen Kontrolle der Fluglage einer Rotorblattdrohne (10) mit Multirotoren (12), die von jeweiligen Motoren angetrieben werden, die auf differenzierte Weise gesteuert werden,
für die automatische Ausführung einer vorprogrammierten Flugfigur des Flip-Typs bzw. des Salto-Typs, durch Rotation der Drohne um eine vollständige Umdrehung um eine Rotationsachse, die von der Rollachse (30) bzw. von der Nickachse (28) der Drohne gebildet ist,
wobei dieses Verfahren die Durchführung, bei Erhalt einer Anweisung zum Auslösen der vorprogrammierten Figur, einer Abfolge von folgenden Schritten umfasst:

    a) gleichzeitiges Steuern der Motoren in der Form, dass der Drohne ein vorheriger Auftriebsimpuls ($V_z$) nach oben verliehen wird (PHASE 1); und
    b) Steuern der Motoren in der Form, dass eine Rotation der Drohne um die Rotationsachse erzeugt wird, aus einer anfänglichen Winkelposition in eine endgültige Winkelposition mit einer Winkelgeschwindigkeit von gleich Null,

wobei dieser Schritt eine Phase der Steuerung der Motoren mit offenem Regelkreis umfasst, wobei Schritt b) die folgenden aufeinanderfolgenden Teilschritte umfasst:

    b1) differenziertes, nicht geregeltes Steuern der Motoren in der Form, dass eine Rotation der Drohne um die Rotationsachse aus einer anfänglichen Winkelposition in eine vorher festgelegte Zwischenwinkelposition erzeugt wird (PHASE 2); und dann
    b2) differenziertes, Bahn-Referenzzielgeregeltes Steuern der Motoren, das im Hinblick auf die Winkelgeschwindigkeit und/oder den Winkel in der Form definiert ist, dass die Rotation der Drohne um eine vollständige Umdrehung um die Rotationsachse aus der Zwischenwinkelposition mit einer Winkelgeschwindigkeit von ungleich Null in eine endgültige Winkelposition mit einer Winkelgeschwindigkeit von gleich Null vollendet wird (PHASE 3),

wobei das Verfahren **dadurch gekennzeichnet ist, dass** Schritt b2) die folgenden Teilschritte umfasst:

    b21) Setzen eines Wertes für die Haltezeit zwischen der Zwischenwinkelposition und der endgültigen Winkelposition;
    b22) Messen der Winkelgeschwindigkeit der Drohne, wenn diese die vorher festgelegte Zwischenwinkelposition erreicht;
    b23) ausgehend von der in Schritt b21) gesetzten Haltezeit und der in Schritt b22) erfassten Messung Parametrieren einer vorher festgelegten Vorhersagefunktion, die eine optimale kontinuierliche Veränderung der Winkelposition der Drohne in Abhängigkeit von der Zeit modelliert, aus der Zwischenwinkelposition in die endgültige Winkelposition am Ende der gesetzten Zeit; und
    b24) ausgehend von der in Schritt b23) parametrierten Vorhersagefunktion Erzeugen von Sollwerten, die einer vorherberechneten Zielwinkelposition zu einem bestimmten Zeitpunkt entspricht, und Anwenden dieser Sollwerte auf einen Regelkreis zur Kontrolle der Motoren der Drohne.

2. Verfahren nach Anspruch 1, bei dem die Sollwerte Vorgaben für den Neigungswinkel ($\varphi$) der Drohne relativ zu seiner Rollachse (30) bzw. relativ zu seiner Nickachse (28) sind.

3. Verfahren nach Anspruch 1, bei dem die vorher festgelegte Vorhersagefunktion eine polynomische Funktion ist und Schritt b23) zum Parametrieren dieser Funktion ein Schritt zum Bestimmen der Koeffizienten des Polynoms ist.

4. Verfahren nach Anspruch 3, bei dem die polynomische Funktion eine polynomische Funktion dritten Grades ist.

5. Verfahren nach Anspruch 4, bei dem die polynomische Funktion eine Funktion des folgenden Typs ist.

13

$$\varphi(t) = a.t^3 + b.t^2 + c.t + d$$

wobei $\varphi(t)$ die Winkelposition ist, die dem in Schritt b24 erzeugten Sollwert entspricht, und *a, b,* c und *d* die Koeffizienten des in Schritt b23) parametrierten Polynoms sind, so dass:

$$a = \frac{1}{T^2} * \left( \frac{2 * \varphi_{initial}}{T} + p_{initial} \right)$$

$$b = -\frac{1}{T} * \left( \frac{3 * \varphi_{initial}}{T} + 2 * p_{initial} \right)$$

$$c = p_{initial}$$

$$d = \varphi_{initial}$$

wobei

$T$ der Wert der in Schritt b21) gesetzten Haltezeit ist,
$\varphi_{initial}$ der Winkelwert der Zwischenwinkelposition ist und
$P_{initial}$ die in Schritt b22) gemessene Winkelgeschwindigkeit der Drohne ist, für die Zwischenwinkelposition.

6. Verfahren nach Anspruch 1, umfassend mindestens eine Wiederholung der Schritte b22) und b23), wenn die Drohne eine vorher festgelegte Winkelposition zur Neudefinition der Vorgaben erreicht, wobei diese Winkelposition zur Neudefinition der Vorgaben zwischen der Zwischenwinkelposition aus Schritt b2) und der endgültigen Winkelposition liegt und wobei die Winkelposition zur Neudefinition als neue Zwischenwinkelposition für das Parametrieren in Schritt b23) genommen wird.

7. Verfahren nach Anspruch 1, bei dem Schritt a) zum gleichzeitigen Steuern der Motoren in der Form, dass der Drohne ein vorheriger Auftriebsimpuls nach oben verliehen wird, ein Schritt ist, der unter Beibehaltung einer Kontrolle der Fluglage der Drohne durchgeführt wird.

8. Verfahren nach Anspruch 1, ferner umfassend, sobald die endgültige Winkelposition erreicht ist, folgenden endgültigen Schritt:

c) Übergehen (48) in einen Auftriebszustand (42) der Drohne mit Aktivierung eines stationären Flugregelkreises, der in der Lage ist, die Drohne mit einer anfänglichen horizontalen linearen Geschwindigkeit von gleich Null und einer Neigung gegenüber dem Boden von gleich Null zu stabilisieren.

9. Software, die in einen digitalen Speicher einer Rotorblattdrohne heruntergeladen werden kann, wobei diese Software Anweisungen umfasst, die, wenn sie bei Erhalt einer von einer Fernsteuervorrichtung stammenden Anweisung zum Auslösen einer vorprogrammierten Flugfigur des Flip-Typs bzw. des Salto-Typs ausgeführt werden, ein Verfahren zur dynamischen Kontrolle der Fluglage einer Drohne nach einem der Ansprüche 1 bis 8 durchführen.

**Claims**

1. A method for dynamic control of attitude of a rotary-wing drone (10) with multiple rotors (12) driven by respective motors controlled in a differentiated manner,
for the automatic execution of a pre-programmed manoeuvre of the spin type, respectively of the flip type, by rotation of the drone over a full turn about an axis of rotation consisted by the roll axis (30), respectively the pitch axis (28), of the drone,
said method comprising the execution, upon receipt of an instruction for triggering the pre-programmed manoeuvre, of a sequence of steps of:

a) simultaneous control of the motors so as to impart to the drone a preliminary impulse of upward vertical thrust ($V_z$) (PHASE 1); and
b) control of the motors so as to produce a rotation of the drone about the axis of rotation, from an initial angular position to a final angular position with a zero angular speed,
this step comprising a phase of open-loop control of the motors, step b) comprising the successive sub-steps of:

b1) differentiated control of the motors, not slaved, so as to produce a rotation of the drone about the axis of rotation, from an initial angular position to a predetermined intermediate angular position (PHASE 2); then
b2) differentiated control of the motors, slaved to a reference target-trajectory, defined in terms of angular speed and/or angle, so as to complete the rotation of the drone over a full turn about the axis of rotation from the intermediate angular position with a non-zero angular speed, to a final angular position with a zero angular speed (PHASE 3),

said method being **characterized in that** step b2) comprises the sub-steps of:

b21) allotting a value of down time between the intermediate angular position and the final angular position;
b22) measuring the angular speed of the drone when the latter reaches the predetermined intermediate angular position;
b23) based on the down time allotted at step b21) and on the measurement acquired at step b22), parameterizing a predetermined predictive function modelling an optimum continuous variation of the angular position of the drone as a function of time, from the intermediate angular position to the final angular position at the end of the allotted time; and
b24) based on the predictive function parameterized at step b23), generating set-point values corresponding to a pre-calculated target angular position at a given instant, and applying these set-point values to a control loop for controlling the motors of the drone.

2. The method of claim 1, wherein the set-point values are set points ($\varphi$) of inclination angle of the drone with respect to its roll axis (30), respectively with respect to its pitch axis (28).

3. The method of claim 1, wherein the predetermined predictive function is a polynomial function, and step b23) of parameterizing said function is a step of determining the polynomial coefficients.

4. The method of claim 3, wherein the polynomial function is a third-order polynomial function.

5. The method of claim 4, wherein the polynomial function is a function of the type:

$$\varphi(t) = a.t^3 + b.t^2 + c.t + d$$

$\varphi(t)$ being the angular position corresponding to the set-point value generated at step b24), and
$a, b, c$ and $d$ being the polynomial coefficients parameterized at step b23), such that:

$$a = \frac{1}{T^2} * \left( \frac{2 * \varphi_{initial}}{T} + p_{initial} \right)$$

$$b = \frac{1}{T} * \left( \frac{3 * \varphi_{initial}}{T} + 2 * p_{initial} \right)$$

$$c = \mathrm{p}_{\text{initial}}$$

$$d = \varphi_{\text{initial}}$$

*T* being the down-time value allocated at step b21),

$\varphi_{\text{initial}}$ being the angle value of the intermediate angular position, and

$p_{\text{initial}}$ being the angular speed of the drone measured at step b22), for the intermediate angular speed.

6. The method of claim 1, comprising at least one repetition of steps b22) and b23) when the drone reaches a predetermined angular position of redefinition of the set points, this angular position of redefinition of the set points being comprised between the intermediate angular position of step b2) and the final angular position, and the angular position of redefinition being taken as a new intermediate angular position for the parameterization of step b23).

7. The method of claim 1, wherein step a) of simultaneous control of the motors so as to impart to the drone a preliminary impulse of upward vertical thrust is a step executed by keeping a control of attitude of the drone.

8. The method of claim 1, further comprising, once the final angular position reached, a final step of:

   c) transition (48) to a lift state (42) of the drone with activation of a hovering flight control loop adapted to stabilize the drone with a zero horizontal linear speed and a zero inclination with respect to the ground.

9. A software, downloadable into a digital memory of a rotary-wing drone, said software comprising instructions that, when executed upon receipt of an instruction for triggering the pre-programmed manoeuvre of the spin type or of the flip type, coming from a remote-control device, implementing a method for dynamic control of attitude of the drone according to one of claims 1 to 8.

Fig. 1

Fig. 2

Fig. 3

Fig. 4

Fig. 5

EP 2 541 359 B1

**Fig. 6**

**Fig. 7**

## RÉFÉRENCES CITÉES DANS LA DESCRIPTION

**Documents brevets cités dans la description**

- WO 2010061099 A2
- WO 2009109711 A2

- FR 2915569 A1

**Littérature non-brevet citée dans la description**

- **LUPASHIN S et al.** A Simple Learning Strategy for High-Speed Quadrocopter Multi-Flips. *Proceedings of the 2010 IEEE International Conference on Robotics and Automation,* Mai 2010, 1642-1648

- **GILLULA JH et al.** Design of Guaranteed Safe Maneuvers Using Reachable Sets: Autonomous Quadrotor Aerobatics in Theory and Practice. *Proceedings of the 2010 IEEE International Conference on Robotics and Automation,* Mai 2010, 1649-1654